# EUROPEAN PATENT APPLICATION

(11) **EP 4 459 459 A1**
(43) Date of publication of application: **06.11.2024**
(21) Application number: 23746119.9
(22) Date of filing: 17.01.2023
(51) Int. Cl.: G06F 8/65

(54) **SOFTWARE LOADING METHOD AND RELATED APPARATUS**

(30) Priority: 25.01.2022 CN 202210086154
(71) Applicant: Huawei Technologies Co., Ltd., Shenzhen, Guangdong 518129 (CN)
(72) Inventor: CAO, Bin, Shenzhen, Guangdong 518129 (CN); LU, Xiaodong, Shenzhen, Guangdong 518129 (CN); ZHENG, Tairan, Shenzhen, Guangdong 518129 (CN)
(74) Representative: Pfenning, Meinig & Partner mbB
(86) International application number: PCT/CN2023/072563
(87) International publication number: WO 2023/143237

(57) **Abstract**

This application discloses a software loading method, applied to a network device on which software is deployed. In the method, a software version identifier is indicated by using a version file, and when loading software, the network device compares a version identifier of to-be-loaded software with the version identifier in the version file, to determine whether a version of current to-be-loaded software is a secure version. This implements protection of a software loading process. Because security of the version file is ensured through security verification, and the version file does not need to be stored in an eFUSE with a small storage capacity, the version file can be a file with a large capacity. Therefore, the version file with the large capacity can indicate a plurality of software version identifiers, to implement protection of loading processes of a plurality of pieces of software, and improve security of the network device.

## Description

This application claims priority to Chinese Patent Application No. 202210086154.1, filed with the China National Intellectual Property Administration on January 25, 2022 and entitled "SOFTWARE LOADING METHOD AND RELATED APPARATUS", which is incorporated herein by reference in its entirety.

### TECHNICAL FIELD

This application relates to the field of computer security technologies, and in particular, to a software loading method and a related apparatus.

### BACKGROUND

In a process in which a network device loads a software program, the network device usually performs startup verification on a software program to ensure authenticity and integrity of the loaded software program, to be specific, ensure that the software program is formally released and is not tampered with. However, if formally released software programs have vulnerabilities, these software programs that have vulnerabilities can still pass the startup verification and are normally loaded and run. In this case, in a process in which the network device runs the software program, there is a risk that the network device is hijacked by an attacker based on the vulnerability of the software program.

Generally, when finding the vulnerability of the software program, a software program releasing party releases a new version of the software program to fix the vulnerability of the software program. In some cases, to achieve an objective of attacking the network device, the attacker usually triggers, by using a specific attack means, the network device to install an original version of the software program, to hijack the network device based on the vulnerability of the original version of the software program. Therefore, forbidding the network device from loading the software program that has the vulnerability is an urgent problem to be resolved.

In the conventional technology, the network device uses an electronic fuse (electronic FUSE, eFUSE) to store a version number of the software program. The eFUSE is a write-once storage medium, in other words, the version number in the eFUSE can merely be incrementally modified. In the process in which the network device loads the software program, the network device compares the version number in the eFUSE with a version number of a software program that is being loaded, and when the version number in the eFUSE is less than or equal to the version number of the software program that is being loaded, determines that a version of the software program that is being loaded is secure, and therefore loads the software program. However, a storage capacity of the eFUSE is small, and merely a small amount of information can be recorded. As a result, the eFUSE is commonly and merely used to implement loading protection on a basic input output system (Basic Input Output System, BIOS), and cannot be used in loading protection on other software.

### SUMMARY

This application provides a software loading method, to implement protection of loading processes of a plurality of pieces of software, and improve security of a network device.

A first aspect of this application provides a software loading method, where the method is applied to a network device on which software is deployed. The software loading method includes: obtaining a version file that passes security verification, where the version file includes one or more software version identifiers, and the one or more software version identifiers are used to determine a secure software version; obtaining a first version identifier, where the first version identifier indicates a version of to-be-loaded software; and determining, based on the one or more software version identifiers in the version file and the obtained first version identifier, that the version of the to-be-loaded software is the secure version, and loading the to-be-loaded software.

In this solution, a network device vendor indicates the software version identifier by using the version file, and when the software is loaded, compares a version identifier of the to-be-loaded software with the version identifier in the version file, to determine whether a version of current to-be-loaded software is a secure version. This implements protection of a software loading process. Because security of the version file is ensured through the security verification, and the version file does not need to be stored in an eFUSE with a small storage capacity, the version file can be a file with a large capacity. Therefore, the version file with the large capacity can indicate a plurality of software version identifiers, to implement protection of loading processes of a plurality of pieces of software, and improve security of the network device.

Optionally, the one or more software version identifiers in the version file indicate a disabled software version. It is determined that, in response to that the one or more software version identifiers in the version file are all different from the first version identifier, the version of the to-be-loaded software is the secure version.

Simply speaking, when the first version identifier is in a disabled list in the version file, it indicates that a software version corresponding to the first version identifier is the disabled software version. Therefore, the network device determines that the software version corresponding to the first version identifier is an insecure software version.

Optionally, the one or more software version identifiers in the version file indicate the secure software version. It is determined that, in response to that a software version identifier that is the same as the first version identifier exists in the one or more software version identifiers in the version file, the version of the to-be-loaded software is the secure version.

In other words, the version file indicates the secure software version by using a security list that includes the one or more software version identifiers. When the first version identifier is not in the security list in the version file, it indicates that the software version corresponding to the first version identifier is the insecure software version.

Optionally, the version file further includes a first version number, and the first version number indicates a version of the version file. The method further includes: obtaining a second version number stored in a secure storage area in the network device, where the second version number stored in the secure storage area indicates a secure version of the version file; and determining, in response to that the second version number is less than or equal to the first version number, that the version of the version file is the secure version.

In this embodiment, the network device verifies validity of the version file by using the version number in the secure storage area, so that a rollback attack on the version file by an attacker can be effectively prevented. This ensures security of subsequent software loading based on the version file.

Optionally, the version file further includes a digital signature of the version file. The method further includes: verifying the digital signature; and determining, in response to that the digital signature passes the verification, that the version file is a file that passes the security verification.

In this embodiment, the network device verifies the security of the version file based on the digital signature of the version file. This can ensure that a source of the version file is secure and the version file is complete, and ensure the security of the subsequent software loading based on the version file.

Optionally, the secure storage area includes a trusted platform module or an electronic fuse.

Optionally, the one or more software version identifiers in the version file are respectively hash values of one or more software files.

Optionally, the version file further includes one or more processor models. The one or more processor models respectively correspond to the one or more software version identifiers. The one or more processor models indicate a processor that is in the network device and that is configured to load software corresponding to the one or more software version identifiers.

Optionally, the version file further includes a product type identifier, and the product type identifier indicates a product type of the network device to which the version file is applicable.

Optionally, the method further includes: obtaining a new version file via a network; and replacing the version file in the network device with the new version file.

A second aspect of this application provides a software loading apparatus, where the apparatus is used in a network device on which software is deployed, and includes: an obtaining unit, configured to obtain a version file, where the version file is a file that passes security verification, the version file includes one or more software version identifiers, and the one or more software version identifiers are used to determine a secure software version, where the obtaining unit is further configured to obtain a first version identifier, where the first version identifier indicates a version of to-be-loaded software; and a processing unit, configured to: determine, based on the one or more software version identifiers and the first version identifier, that the version of the to-be-loaded software is the secure version, and load the to-be-loaded software.

Optionally, the one or more software version identifiers in the version file indicate a disabled software version. The processing unit is specifically configured to determine, in response to that the one or more software version identifiers are all different from the first version identifier, that the version of the to-be-loaded software is the secure version.

Optionally, the one or more software version identifiers in the version file indicate the secure software version. The processing unit is specifically configured to determine, in response to that a software version identifier that is the same as the first version identifier exists in the one or more software version identifiers, that the version of the to-be-loaded software is the secure version.

Optionally, the version file further includes a first version number, and the first version number indicates a version of the version file. The obtaining unit is further configured to obtain a second version number stored in a secure storage area in the network device. The processing unit is further configured to determine, in response to that the second version number is less than or equal to the first version number, that the version of the version file is a secure version.

Optionally, the version file further includes a digital signature of the version file. The processing unit is further configured to: verify the digital signature, and determine, in response to that the digital signature passes the verification, that the version file is the file that passes the security verification.

Optionally, the secure storage area includes a trusted platform module or an electronic fuse.

Optionally, the one or more software version identifiers in the version file are respectively hash values of one or more software files.

Optionally, the version file further includes one or more processor models. The one or more processor models respectively correspond to the one or more software version identifiers, and the one or more processor models indicate a processor that is in the network device and that is configured to load software corresponding to the one or more software version identifiers.

Optionally, the version file further includes a product type identifier, and the product type identifier indicates a product type of the network device to which the version file is applicable.

Optionally, the obtaining unit is further configured to obtain a new version file via a network. The processing unit is further configured to replace the version file in the network device with the new version file.

A third aspect of this application provides a network device, including a processor and a memory, where the memory is configured to store program code, and the processor is configured to invoke the program code in the memory, to enable the network device to perform the method according to any implementation of the first aspect.

A fourth aspect of this application provides a computer-readable storage medium, where the computer-readable storage medium stores instructions, and when the instructions are run on a computer, the computer is enabled to perform the method according to any implementation of the first aspect.

A fifth aspect of this application provides a computer program product, where when the computer program product runs on a computer, the computer is enabled to perform the method according to any implementation of the first aspect.

A sixth aspect of this application provides a chip, including one or more processors. Some or all of the processors are configured to read and execute computer instructions stored in a memory, to perform the method in any possible implementation of any one of the foregoing aspects. Optionally, the chip further includes the memory. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. Optionally, the communication interface is an input output interface or a bus interface. The method provided in this application is implemented by one chip, or is implemented by a plurality of chips in cooperation.

The solutions provided in the second aspect to the sixth aspect are used to implement or collaboratively implement the method provided in the first aspect. Therefore, the solutions can achieve beneficial effects the same as or corresponding to those of the first aspect. Details are not described herein again.

### BRIEF DESCRIPTION OF DRAWINGS

FIG. 1 is a schematic diagram of a network architecture to which a software loading method is applied according to an embodiment of this application;
FIG. 2 is a schematic flowchart of a software loading method according to an embodiment of this application;
FIG. 3 is a schematic structural diagram of a version file according to an embodiment of this application;
FIG. 4 is a schematic structural diagram of a version file according to an embodiment of this application;
FIG. 5 is a specific schematic structural diagram of a version file according to an embodiment of this application;
FIG. 6 is a schematic flowchart of generating a digital signature and a CRL file according to an embodiment of this application;
FIG. 7 is a schematic flowchart of updating a version file according to an embodiment of this application;
FIG. 8 is a schematic structural diagram of a software loading apparatus according to an embodiment of this application; and
FIG. 9 is a schematic structural diagram of a network device 900 according to an embodiment of this application.

### DESCRIPTION OF EMBODIMENTS

The following describes embodiments of this application with reference to the accompanying drawings. It is clear that the described embodiments are merely some rather than all of embodiments of this application. Persons of ordinary skill in the art may learn that, with development of technologies and emergence of new scenarios, the technical solutions provided in embodiments of this application are also applicable to similar technical problems.

In the specification, claims, and accompanying drawings of this application, the terms "first", "second", and the like are intended to distinguish between similar objects but do not necessarily indicate a specific order or sequence. In the specification, claims, and accompanying drawings of this application, the term "a plurality of" means two or more.

The specific term "example" herein means "used as an example, embodiment or illustration". Any embodiment described as "example" is not necessarily explained as being superior or better than another embodiment.

The following explains and describes some terms and concepts in embodiments of this application.

### (1) Digital communication network

The digital communication network is a network that uses a digital signal as a carrier to transmit information, or uses the digital signal to digitally modulate a carrier wave and then transmits a modulated carrier wave. The digital communication network can transmit the digital signal and an analog signal such as voice or an image that has been digitally processed.

### (2) Digital signature

The digital signature (also referred to as a digit signature) is a digit string that can merely be generated by an information sender and cannot be forged. The digit string is also a valid proof of authenticity of information sent by the information sender. Simply speaking, the digital signature is similar to a physical signature written on paper, but the digital signature is implemented by using a technology in the field of public key encryption.

For example, when sending a message, a sending party uses a hash function to process the message to obtain a message digest. Then, the sending party encrypts the message digest by using a private key, and uses an encrypted message digest as a digital signature of the message. When sending the message, the sending party sends the message together with the digital signature of the message to a receiving party. After receiving the message, the receiving party processes the received message by using the same hash function as that used by the sending party to process the message, to obtain a message digest. Then, the receiving party uses a public key to decrypt the digital signature of the message to obtain another message digest. If the message digest obtained by using the hash function is the same as the message digest obtained through public key decryption, the receiving party can determine that the message is sent by the sending party.

The digital signature has two functions: (1) The digital signature can be used to determine that the message is indeed signed and sent by the sending party because other persons cannot forge a signature of the sending party. (2) The digital signature can be used to determine integrity of a message. Specifically, the digital signature is obtained by encrypting the message digest by using the private key. Therefore, the digital signature can indicate a feature of the message. If the message changes, a value of the message digest also changes. As a result, a value of the digital signature also changes.

### (3) Certificate revocation list (Certificate Revocation List, CRL)

The CRL is a list of digital certificates that are revoked by a certificate authority before the digital certificates expire. The digital certificates in the CRL are no longer trusted.

### (4) Trusted platform module (Trusted Platform Module, TPM)

The TPM is an international standard of a secure password processor intended to use a dedicated microcontroller (secure hardware) integrated in a device to process an encryption key in the device. Generally, the TPM is a chip planted inside a computer to provide a root of trust for the computer. Based on the TPM, the computer can securely generate a key.

### (5) Electronic fuse (electronic FUSE, eFUSE)

The eFUSE is actually a one-time programmable memory. The eFUSE includes a plurality of fuses. The eFUSE indicates data by using a fuse blowing condition. For example, if a fuse is not blown, the eFUSE indicates 1; and if the fuse is blown, the eFUSE indicates 0. When the data stored in the eFUSE needs to be modified, the fuse in the eFUSE is blown. Because each fuse in the eFUSE can merely be blown once, modification of the data stored in the eFUSE is irreversible.

The foregoing describes terms and concepts in embodiments of this application. The following describes a scenario to which a software loading method provided in embodiments of this application is applied.

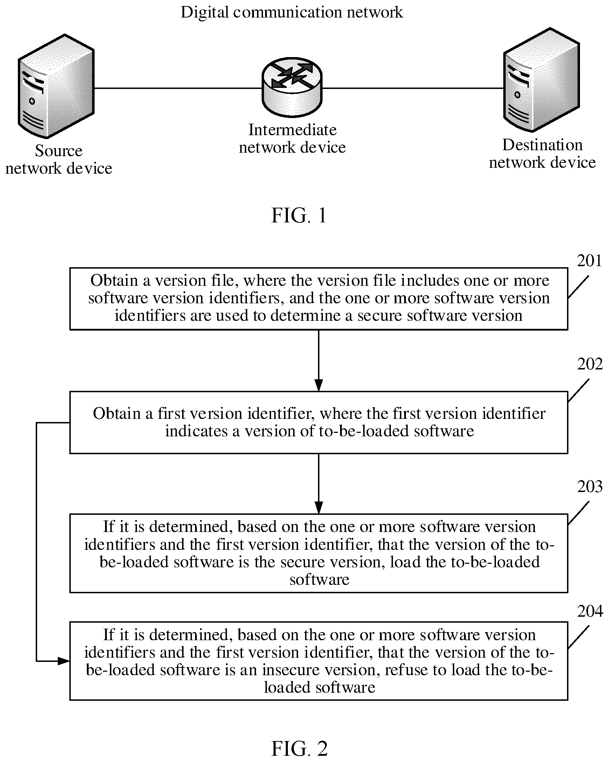

FIG. 1 is a schematic diagram of a network architecture to which a software loading method is applied according to an embodiment of this application. As shown in FIG. 1, a digital communication network usually includes a plurality of network devices, for example, a source network device for sending data, one or more intermediate network devices for transmitting data, and a destination network device for receiving data. Generally, the network device in the digital communication network is on which software is deployed, and the network device implements functions such as data generation, data transmission, and data processing by using the deployed software. For example, the source network device may be, for example, a network device such as a server, a personal computer, a notebook computer, a smartphone, or a tablet computer. The intermediate network device may be, for example, a network device such as a router, a switch, a hub, a gateway, or a firewall. The destination network device may be, for example, a network device such as a server, a personal computer, a notebook computer, a smartphone, or a tablet computer.

The software loading method provided in embodiments of this application is applied to any network device on which software is deployed in the digital communication network. Optionally, the network device to which the software loading method provided in embodiments of this application is applied is implemented by using a virtualization device. For example, the virtualization device is, for example, a virtual machine (virtual machine, VM), a virtual router, or a virtual switch that runs a program that has a function used to send a message. The virtualization device is deployed on a hardware device (for example, a physical server). For example, the network device to which the software loading method provided in embodiments of this application is applied is implemented based on a physical server and in combination with a network functions virtualization (network functions virtualization, NFV) technology.

The foregoing describes the scenario to which the software loading method provided in embodiments of this application is applied. The following describes in detail a specific implementation process of the software loading method provided in embodiments of this application.

FIG. 2 is a schematic flowchart of a software loading method according to an embodiment of this application. As shown in FIG. 2, the software loading method includes the following steps 201 to 204. The software loading method shown in FIG. 2 is applied to a network device on which software is deployed.

Step 201: Obtain a version file, where the version file includes one or more software version identifiers, and the one or more software version identifiers are used to determine a secure software version.

In this embodiment, in a software loading process, the network device first obtains the version file, and performs security verification on the version file, to ensure security of the version file. Optionally, the network device obtains, by accessing local storage space, the version file preset in the network device. Alternatively, the network device obtains, from a configuration file in the local storage space, a network location that stores the version file, and reads the version file from the network location. If the version file passes the security verification, the network device implements the software loading method in this embodiment based on the version file. In other words, in this embodiment, the version file obtained by the network device passes the security verification. That the version file passes the security verification means that the version file is authentically released by a version file releaser, and the version file is not tampered with.

The version file includes the one or more software version identifiers that indicate a software file version, that is, the version file can indicate one or more software versions. Based on the one or more software version identifiers in the version file, the network device can determine the secure software version. For example, if the version file is in a blocklist mode, the one or more software version identifiers in the version file all indicate a disabled software version. Therefore, the network device can determine that a software version other than the software version indicated by the version file is the secure software version. If the software file is in a trustlist mode, the one or more software version identifiers in the version file all indicate the secure software version. Therefore, the network device can determine that merely the software version indicated by the version file is the secure software version, and a software version other than the software version indicated by the version file is the disabled software version.

Optionally, if the version file includes a plurality of software version identifiers, the plurality of software version identifiers in the version file may indicate different software versions corresponding to same software, or the plurality of software version identifiers in the version file may indicate software versions corresponding to different software. This is not specifically limited in this embodiment. For example, in a possible example, if the version file includes three software version identifiers, the three software version identifiers in the version file respectively indicate three different software versions of software A. In another possible example, if the version file includes five software version identifiers, first two software version identifiers in the version file respectively indicate software versions corresponding to software A and software B, and last three software version identifiers in the version file respectively indicate three different software versions of software C.

Optionally, the one or more software version identifiers in the version file are respectively hash values of one or more software files. In other words, the one or more software version identifiers in the version file are obtained by processing the software file by using a hash function. Because content of different software files is different, software version identifiers obtained by processing the different software files by using the hash function are also different, so that each software version identifier can uniquely identify one software file.

Optionally, the software version identifier in the version file is a combination of a software name and a software version.

Step 202: Obtain a first version identifier, where the first version identifier indicates a version of to-be-loaded software.

In this embodiment, in the software loading process, the network device obtains the first version identifier corresponding to the to-be-loaded software. Generally, a version identifier corresponding to software is located in a header structure of a software file. Therefore, the network device obtains, from a header structure of the to-be-loaded software, the first version identifier that indicates the version of the to-be-loaded software. Optionally, in the network device, the to-be-loaded software may be, for example, a BIOS, operating system software, or application software. A form of the to-be-loaded software is not specifically limited in this embodiment.

Optionally, if the one or more software version identifiers in the version file are respectively the hash values of the one or more software files, the network device processes a file of the to-be-loaded software by using the hash function, to obtain the first version identifier.

Step 203: If it is determined, based on the one or more software version identifiers and the first version identifier, that the version of the to-be-loaded software is the secure version, load the to-be-loaded software.

Optionally, if the one or more software version identifiers in the version file indicate the disabled software version, the network device determines, in response to that the one or more software version identifiers are all different from the first version identifier, that the version of the to-be-loaded software is the secure version. Simply speaking, the version file indicates a disabled software version list by using a disabled list that includes the one or more software version identifiers. When the first version identifier is not in the disabled list in the version file, it indicates that a software version corresponding to the first version identifier is not the disabled software version. Therefore, the network device determines that the software version corresponding to the first version identifier is the secure software version.

Optionally, if the one or more software version identifiers in the version file indicate the secure software version, the network device determines, in response to that a software version identifier that is the same as the first version identifier exists in the one or more software version identifiers, that the version of the to-be-loaded software is the secure version. In other words, the version file indicates the secure software version by using a security list that includes the one or more software version identifiers. When the first version identifier is in the security list in the version file, it indicates that the software version corresponding to the first version identifier is the secure software version.

Step 204: If it is determined, based on the one or more software version identifiers and the first version identifier, that the version of the to-be-loaded software is an insecure version, refuse to load the to-be-loaded software.

Optionally, if the one or more software version identifiers in the version file indicate the disabled software version, the network device determines, in response to that the first version identifier is the same as one of the one or more software version identifiers, that the version of the to-be-loaded software is the insecure version. Simply speaking, when the first version identifier is in the disabled list in the version file, it indicates that the software version corresponding to the first version identifier is the disabled software version. Therefore, the network device determines that the software version corresponding to the first version identifier is the insecure software version.

Optionally, if the one or more software version identifiers in the version file indicate the secure software version, the network device determines, in response to that the one or more software version identifiers are all different from the first version identifier, that the version of the to-be-loaded software is the insecure version. In other words, the version file indicates the secure software version by using the security list that includes the one or more software version identifiers. When the first version identifier is not in the security list in the version file, it indicates that the software version corresponding to the first version identifier is the insecure software version.

Optionally, after determining that the version of the to-be-loaded software is the insecure version, the network device generates alarm information based on information (for example, a name of the to-be-loaded software) about the to-be-loaded software, so that network operation and maintenance personnel process insecure software in the network device in time.

In this embodiment, the version file is established to indicate the software version identifier, and when the software is loaded, a version identifier of the software is compared with the version identifier in the version file, to determine whether a version of current software is the secure version. This implements protection of a software loading process. Because the security of the version file is ensured through the security verification, and the version file does not need to be stored in an eFUSE, the version file can indicate the plurality of software version identifiers, to implement protection of loading processes of a plurality of pieces of software, and improve security of the network device.

The software in the network device is constantly updated with time, and the secure software version also constantly changes. Therefore, the version file that indicates the secure software version is usually also constantly updated with time.

Optionally, the network device obtains a new version file via a network, and replaces the version file in the network device with the new version file. The new version file also includes one or more software version identifiers, and the new version file indicates a changed software secure version.

Specifically, when the secure version or the disabled version corresponding to the software deployed on the network device changes, a device vendor releases the new version file on the network, to indicate the changed software secure version. After management personnel of the network device find, by accessing the network, that the new version file is released, the management personnel download the new version file via the network, and deliver the new version file to the network device, so that the network device can replace an original version file in the network device with the new version file. This implements an update of the version file.

In this embodiment, the network device updates the version file via the network, and can obtain adjustment information of the software secure version, to adjust a software loading policy in time, and ensure security of the software loading process.

In some cases, before the device vendor finds that some software versions have security vulnerabilities, a version file released by the device vendor still indicates that the software versions that have the security vulnerabilities are secure versions. After the device vendor finds the software versions that have the security vulnerabilities, the device vendor releases the new version file, and the new version file indicates that the software versions that have the security vulnerabilities are disabled software versions. It may be understood that, when the version file in the network device is an original version of the version file, the network device may also allow, based on the version file, loading of software that has a security vulnerability.

Based on this, in this embodiment, to ensure validity of the version file, the network device determines, by using a version identifier of the version file, whether a version of the version file is a secure version.

Optionally, the version file obtained by the network device further includes a first version number, and the first version number indicates the version of the version file. Before the network device performs the foregoing steps 202 to 204 based on the version file, the network device obtains a second version number stored in a secure storage area in the network device. The network device determines, in response to that the second version number stored in the secure storage area is less than or equal to the first version number, that the version of the version file is the secure version. In addition, if the second version number stored in the secure storage area is greater than the first version number, the network device determines that the version of the version file is an insecure version. The second version number stored in the secure storage area indicates the secure version of the version file. Because a version number of the version file is usually incremented one-way, when the first version number of the version file is less than the second version number in the secure storage area, the network device can determine that the version file in the network device is of the original version (that is, an invalid version).

After determining that the version of the version file is a valid version, the network device performs the foregoing steps 202 to 204 based on the version file, to be specific, the network device performs the software loading process based on the version file. If the version of the version file is the invalid version, the network device considers that the network device cannot determine security of the to-be-loaded software, and thus refuses to load the software.

In this embodiment, the network device verifies validity of the version file by using the version number in the secure storage area, so that a rollback attack on the version file by an attacker can be effectively prevented. This ensures security of subsequent software loading based on the version file.

Optionally, the secure storage area in the network device includes, for example, a TPM or an eFUSE. The secure storage area is not specifically limited in this embodiment. After the secure version of the version file changes, the network operation and maintenance personnel update the version number stored in the secure storage area in the network device, to ensure that the version number stored in the secure storage area can indicate the valid version of the version file.

The foregoing describes determining, by the network device, the validity of the version file by verifying the version identifier of the version file. The following describes a process in which the network device verifies the security of the version file in another manner.

Optionally, the version file includes a digital signature of the version file, and the network device determines, by verifying the digital signature of the version file, whether the version file passes the security verification.

Specifically, the network device verifies the digital signature of the version file. The network device determines, in response to that the digital signature passes the verification, that the version file is a file that passes the security verification, and performs the foregoing steps 202 to 204 based on the version file. The network device determines, in response to that the digital signature does not pass the verification, that the version file is a file that does not pass the security verification, and refuses to load the software.

For example, a process in which the network device verifies the digital signature of the version file includes: The network device processes the version file by using the hash function, to generate a first digest value of the version file. Then, the network device decrypts the digital signature of the version file by using a public key, to obtain a second digest value of the version file. Finally, the network device determines, by comparing whether the first digest value is the same as the second digest value, whether the digital signature of the version file passes the verification. If the first digest value is the same as the second digest value, the network device determines that the digital signature of the version file passes the verification. If the first digest value is different from the second digest value, the network device determines that the digital signature of the version file does not pass the verification.

In this embodiment, the network device verifies the security of the version file based on the digital signature of the version file. This can ensure that a source of the version file is secure and the version file is complete, and ensure the security of the subsequent software loading based on the version file.

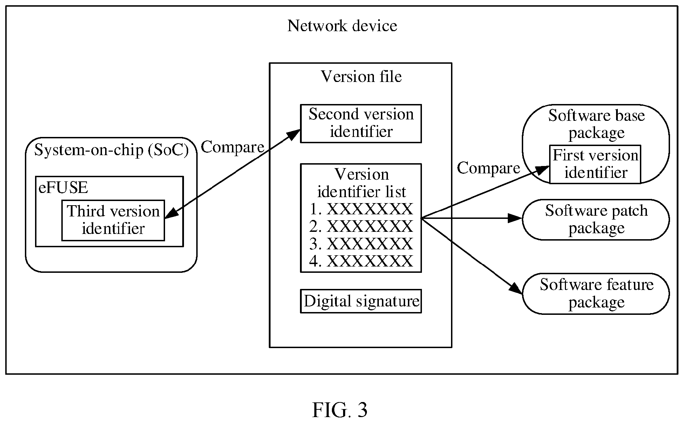

FIG. 3 is a schematic structural diagram of a version file according to an embodiment of this application. As shown in FIG. 3, the version file of a network device includes a first version number, a version identifier list, and a digital signature. The first version number indicates a version of the version file. The version identifier list includes one or more version identifiers, and the one or more version identifiers indicate a secure software version or a disabled software version.

The network device includes a system-on-chip (System-on-Chip, SoC), the SoC integrates an eFUSE, and the eFUSE stores a second version number. The second version number indicates a secure version of the version file. In a software loading process, the network device compares the second version number in the eFUSE with the first version number in the version file, to determine validity of the version file. In addition, the network device further verifies the digital signature in the version file, to determine security of the version file.

If the network device determines that the version file is valid and secure, the network device compares a first version identifier of to-be-loaded software with the version identifier list in the version file, to determine whether a version of the to-be-loaded software is the secure version. A software file in the network device may be stored in the network device in a form of a software base package, a software patch package, a software feature package, and the like. The network device loads the software by loading the software base package, the software patch package, or the software feature package.

The foregoing describes content that is in the version file and that is used to verify the security of the version file and security of the software. The following describes other content in the version file.

It may be understood that the network device in a digital communication network may be a composite device, to be specific, the network device may include a plurality of entities that can load the software. For example, if the network device is a router or a switch, the network device includes a main control board and a service board, and the main control board and the service board can independently load different software. Therefore, to distinguish between the entities that load the software, in this embodiment, information about the entity that loads the software is added to the version file to indicate the entity that loads the software.

Optionally, the version file further includes one or more processor models. The one or more processor models respectively correspond to one or more software version identifiers, and the one or more processor models indicate a processor that is in the network device and that is configured to load software corresponding to the one or more software version identifiers.

Specifically, if the version file includes one software version identifier, the version file includes one processor model corresponding to the software version identifier. If the version file includes a plurality of software version identifiers, the version file includes the one or more processor models. In other words, each software version identifier in the plurality of software version identifiers has a corresponding processor model. Alternatively, some software version identifiers in the plurality of software version identifiers have corresponding processor models.

Optionally, the version file further includes a product type identifier, and the product type identifier indicates a product type of the network device. For example, when the product type identifier in the version file is 01, it indicates that the network device that uses the version file is the router. When the product type identifier in the version file is 02, it indicates that the network device that uses the version file is the switch. When the product type identifier in the version file is 03, it indicates that the network device that uses the version file is a server.

For ease of understanding, the following describes in detail the version file provided in embodiments of this application in combination with specific examples.

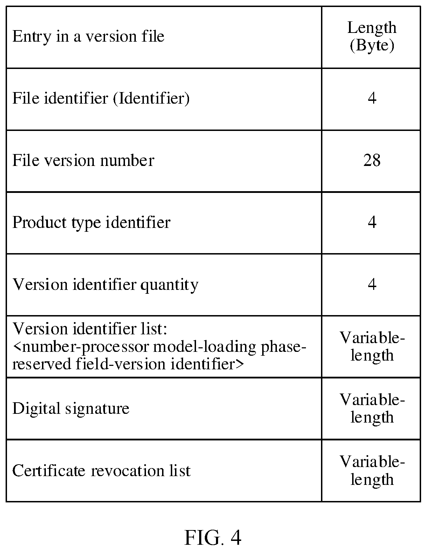

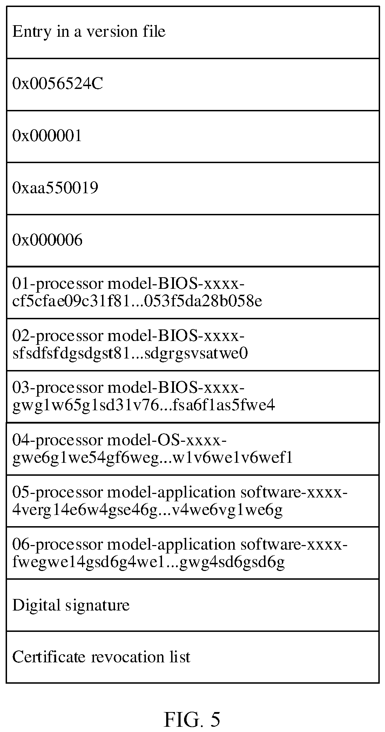

FIG. 4 is a schematic structural diagram of a version file according to an embodiment of this application. As shown in FIG. 4, the version file includes a plurality of entries, which are respectively: a file identifier (Identifier), a file version number, a product type identifier, a version identifier quantity, a version identifier list, a digital signature, and a CRL file. The following separately describes the entries in the version file with reference to specific examples. FIG. 5 is a specific schematic structural diagram of a version file according to an embodiment of this application.

File identifier: is an identifier of the version file, and indicates that a file in which the file identifier is located is the version file. A length of the file identifier is, for example, 4 bytes. As shown in FIG. 5, the file identifier is, for example, 0x0056524C.

File version number: indicates a version number of the version file, and is a one-way incremented number. A length of the file version number is, for example, 28 bytes. As shown in FIG. 5, the file version number is, for example, 0x000001.

Product type identifier: is an identifier of a type of a network device, and indicates the type of the network device to which the version file is applied. The type of the network device is, for example, a terminal, a server, a switch, a router, or a firewall. A length of the product type identifier is, for example, 4 bytes. As shown in FIG. 5, the product type identifier is, for example, 0xaa550019.

Version identifier quantity: is a quantity of version identifiers in the version file. In other words, the version identifier quantity is a quantity of entries included in a version identifier list. A length of the version identifier quantity is, for example, 4 bytes. As shown in FIG. 5, the version identifier quantity is, for example, 0x000006, indicating that the version file includes six version identifiers in total.

Version identifier list: is a list that records the version identifiers in the version file. Each entry in the version identifier list includes a number, a processor model, a loading phase, a reserved field, and a version identifier. The number indicates a sequence number of a current entry in the version identifier list. The processor model indicates a processor configured to load software corresponding to a version identifier in the current entry. The loading phase indicates a phase of loading the software corresponding to the version identifier in the current entry, for example, a BIOS phase, an operating system loading phase, or an application software loading phase. The reserved field indicates a reserved field. As shown in FIG. 5, the version identifier list includes six entries, and a 1^{st} entry is specifically: 01-processor model-BIOS-xxxx-cf5cfae09c31f81...053f5da28b058e.

Digital signature: is a signature of the version file.

CRL file: includes a CRL corresponding to the digital signature in the version file and a digital signature of the CRL.

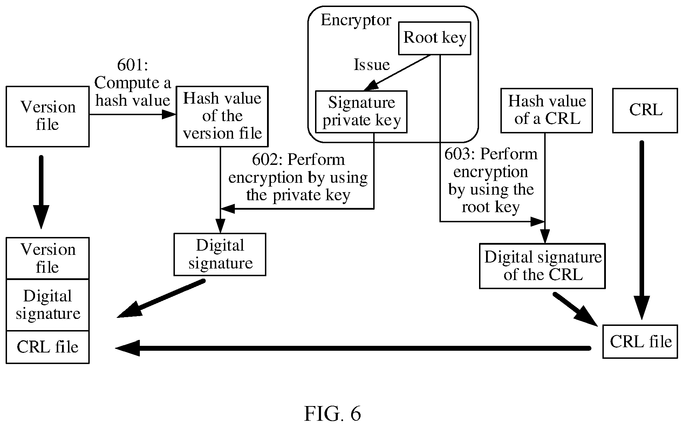

FIG. 6 is a schematic flowchart of generating a digital signature and a CRL file according to an embodiment of this application. As shown in FIG. 6, a procedure of generating the digital signature and the CRL file includes the following steps 601 to 603.

Step 601: Compute a hash value of a version file.

In this step, a network device computes the hash value of the version file by using a hash algorithm.

Step 602: Encrypt the hash value of the version file by using a private key, to obtain a digital signature of the version file.

After obtaining the hash value of the version file, the network device encrypts the hash value of the version file by using the private key, to obtain the digital signature of the version file. The private key used to encrypt the hash value of the version file is obtained through issuing by an encryptor by using a root key.

Step 603: Encrypt a hash value of a CRL by using the root key, to obtain a digital signature of the CRL.

The hash value of the CRL is obtained by processing the CRL by using the hash algorithm. After the digital signature of the CRL is obtained, the CRL file may be generated based on the CRL and the digital signature of the CRL.

The foregoing describes a specific structure of the version file provided in embodiments of this application. The following describes a process in which the network device deploys and updates the version file.

Before delivery of the network device, a supplier of the network device usually pre-installs, in the network device, software run by the network device. In addition, the supplier may also deploy, in the network device, the version file that is related to the software in the network device. For example, the supplier installs the version file in the network device as a part of the software.

After delivery of the network device, the network device determines, by accessing a software release website, whether the version file is updated, and when the version file is updated, obtains a new version file from the software release website to replace an original version file in the network device.

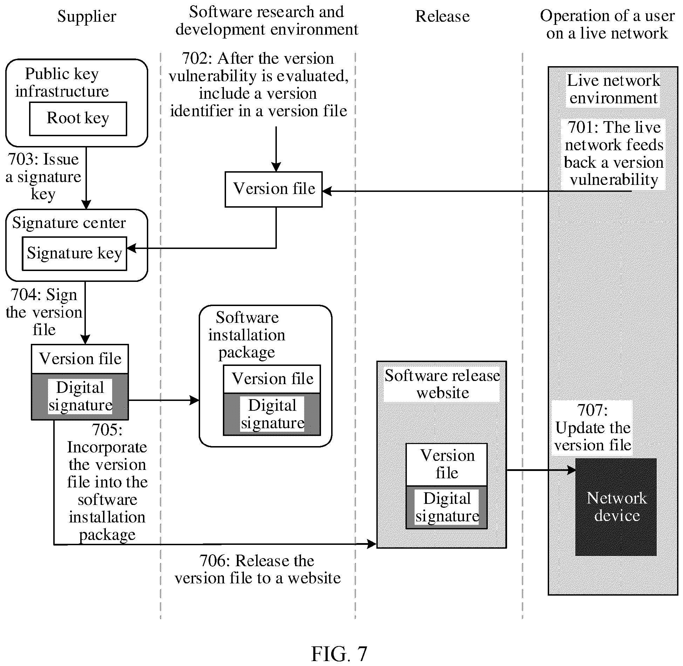

FIG. 7 is a schematic flowchart of updating a version file according to an embodiment of this application. As shown in FIG. 7, a procedure of updating the version file includes the following steps 701 to 707.

Step 701: A live network feeds back a version vulnerability.

In a process in which a network device is put into use, users or operation and maintenance personnel feed back, based on a running condition of the network device, a version vulnerability corresponding to software running on the network device.

Step 702: After the version vulnerability is evaluated, include a version identifier in the version file.

After obtaining the fed back version vulnerability, software research and development personnel evaluate whether a version of the software has a security risk. If the version of the software has the security risk, the software research and development personnel include a version identifier of the software in the version file, to generate a new version file.

For example, if the version file indicates a disabled software version, the software research and development personnel include, in the version file, a version identifier of newly found software that has a security risk, to generate the new version file. For another example, if the version file indicates a secure software version, the software research and development personnel remove, from the version file, the version identifier of the newly found software that has the security risk, to obtain the new version file.

Step 703: A supplier of the network device issues a signature key by using a root key.

The root key is usually generated by a public key infrastructure and stored in the public key infrastructure. The signature key obtained through issuing by using the root key is stored in a signature center.

Step 704: The supplier signs the version file by using the signature key, to obtain a digital signature of the version file.

The digital signature of the version file is attached to the version file, so that the network device that obtains the version file can perform security verification on the version file based on the digital signature.

Step 705: The supplier incorporates the version file into a software installation package.

For some network devices before delivery, corresponding software may need to be installed in the network devices. Therefore, the supplier incorporates the version file into the software installation package. In a process of installing the software by obtaining the software installation package, the network device may obtain the version file, so that the network device subsequently protects a software loading process based on the version file.

Step 706: The supplier releases the version file on a software release website.

In addition, the supplier may also release the version file to the software release website, so that the network device that has obtained an original version of the version file implements an update of the version file.

Step 707: Management personnel of the network device obtain the new version file by accessing the software release website, and update the version file in the network device based on the new version file.

The foregoing describes the software loading method provided in embodiments of this application. The following describes an execution body for performing the foregoing software loading method.

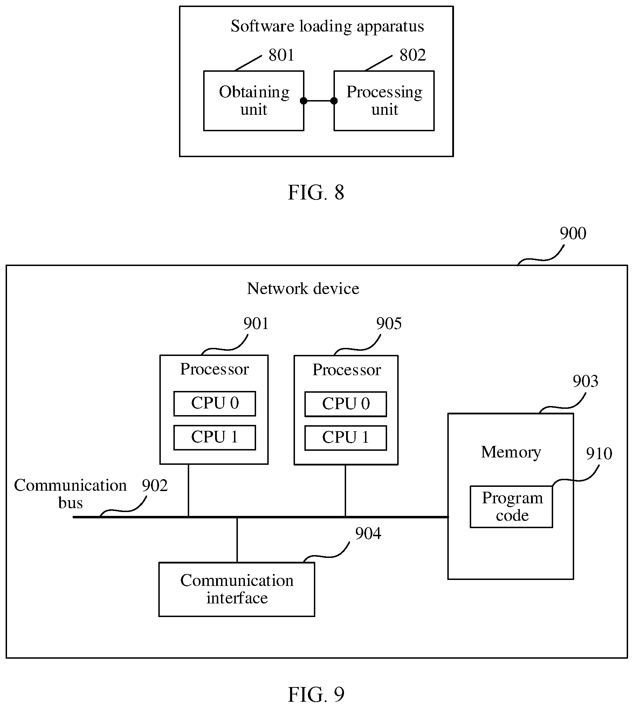

FIG. 8 is a schematic structural diagram of a software loading apparatus according to an embodiment of this application. As shown in FIG. 8, the software loading apparatus is used in a network device on which software is deployed. The software loading apparatus includes: an obtaining unit 801, configured to obtain a version file, where the version file is a file that passes security verification, the version file includes one or more software version identifiers, and the one or more software version identifiers are used to determine a secure software version, where the obtaining unit 801 is further configured to obtain a first version identifier, where the first version identifier indicates a version of to-be-loaded software; and a processing unit 802, configured to: determine, based on the one or more software version identifiers and the first version identifier, that the version of the to-be-loaded software is the secure version, and load the to-be-loaded software.

Optionally, the one or more software version identifiers in the version file indicate a disabled software version. The processing unit 802 is specifically configured to determine, in response to that the one or more software version identifiers are all different from the first version identifier, that the version of the to-be-loaded software is the secure version.

Optionally, the one or more software version identifiers in the version file indicate the secure software version. The processing unit 802 is specifically configured to determine, in response to that a software version identifier that is the same as the first version identifier exists in the one or more software version identifiers, that the version of the to-be-loaded software is the secure version.

Optionally, the version file further includes a first version number, and the first version number indicates a version of the version file. The obtaining unit 801 is further configured to obtain a second version number stored in a secure storage area in the network device. The processing unit 802 is further configured to determine, in response to that the second version number is less than or equal to the first version number, that the version of the version file is a secure version.

Optionally, the version file further includes a digital signature of the version file. The processing unit 802 is further configured to: verify the digital signature, and determine, in response to that the digital signature passes the verification, that the version file is the file that passes the security verification.

Optionally, the secure storage area includes a trusted platform module or an electronic fuse.

Optionally, the one or more software version identifiers in the version file are respectively hash values of one or more software files.

Optionally, the version file further includes one or more processor models. The one or more processor models respectively correspond to the one or more software version identifiers, and the one or more processor models indicate a processor that is in the network device and that is configured to load software corresponding to the one or more software version identifiers.

Optionally, the version file further includes a product type identifier, and the product type identifier indicates a product type of the network device to which the version file is applicable.

Optionally, the obtaining unit 801 is further configured to obtain a new version file via a network. The processing unit 802 is further configured to replace the version file in the network device with the new version file.

FIG. 9 is a schematic structural diagram of a network device 900 according to an embodiment of this application. The network device 900 is equipped with the foregoing software loading apparatus. The network device 900 is implemented by using a general bus architecture.

The network device 900 includes at least one processor 901, a communication bus 902, a memory 903, and at least one communication interface 904.

Optionally, the processor 901 is a general-purpose CPU, an NP, a microprocessor, or is one or more integrated circuits configured to implement the solutions of this application, for example, an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication bus 902 is configured to transmit information between the foregoing components. The communication bus 902 is classified into an address bus, a data bus, a control bus, and the like. For ease of indication, merely one thick line indicates the bus in the figure, but this does not mean that there is merely one bus or merely one type of the bus.

Optionally, the memory 903 is a read-only memory (read-only memory, ROM) or another type of static storage device that can store static information and instructions. Alternatively, the memory 903 is a random access memory (random access memory, RAM) or another type of dynamic storage device that can store information and instructions. Alternatively, the memory 903 is an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, the memory is not limited thereto. Optionally, the memory 903 exists independently, and is connected to the processor 901 through the communication bus 902. Optionally, the memory 903 and the processor 901 are integrated together.

The communication interface 904 uses any apparatus such as a transceiver, and is configured to communicate with another device or a communication network. The communication interface 904 includes a wired communication interface. Optionally, the communication interface 904 further includes a wireless communication interface. The wired communication interface is, for example, an Ethernet interface. The Ethernet interface is an optical interface, an electrical interface, or a combination thereof. The wireless communication interface is a wireless local area network (wireless local area network, WLAN) interface, a cellular network communication interface, a combination thereof, or the like.

During specific implementation, in this embodiment, the processor 901 includes one or more CPUs, for example, a CPU 0 and a CPU 1 shown in FIG. 9.

During specific implementation, in this embodiment, the network device 900 includes a plurality of processors, for example, the processor 901 and a processor 905 shown in FIG. 9. Each of the processors is a single-core processor (single-CPU) or a multi-core processor (multi-CPU). The processor herein is one or more devices, circuits, and/or processing cores configured to process data (for example, computer program instructions).

In some embodiments, the memory 903 is configured to store program code 910 for executing the solutions of this application, and the processor 901 executes the program code 910 stored in the memory 903. In other words, the network device 900 implements the foregoing method embodiments by using the processor 901 and the program code 910 in the memory 903.

Embodiments in this specification are all described in a progressive manner, for a same or similar part in embodiments, refer to these embodiments, and each embodiment focuses on a difference from another embodiment.

A refers to B, which means that A is the same as B or A is a simple variant of B.

In the specification and claims of embodiments of this application, the terms "first", "second", and the like are used to distinguish between different objects but are not used to describe a specific sequence of the objects, and cannot be understood as an indication or implication of relative importance. For example, a first rate-limiting channel and a second rate-limiting channel are used to distinguish different rate-limiting channels, but are not used to describe a specific sequence of the rate-limiting channels, and cannot be understood as that the first rate-limiting channel is more important than the second rate-limiting channel.

In embodiments of this application, unless otherwise specified, "at least one" means one or more, and "a plurality of" means two or more.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on a computer, all or some of the procedures or functions described in embodiments of this application are generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, including one or more usable media. The usable medium may be a magnetic medium (for example, a floppy disk, a hard disk, or a magnetic tape), an optical medium (for example, a DVD), a semiconductor medium (for example, a solid-state drive (Solid-State Drive, SSD)), or the like.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A software loading method, wherein the method is applied to a network device on which software is deployed, and the method comprises:
obtaining a version file, wherein the version file is a file that passes security verification, the version file comprises one or more software version identifiers, and the one or more software version identifiers are used to determine a secure software version;
obtaining a first version identifier, wherein the first version identifier indicates a version of to-be-loaded software; and
determining, based on the one or more software version identifiers and the first version identifier, that the version of the to-be-loaded software is the secure version, and loading the to-be-loaded software.

2. The method according to claim 1, wherein the one or more software version identifiers indicate a disabled software version; and
the determining, based on the one or more software version identifiers and the first version identifier, that the version of the to-be-loaded software is the secure version comprises:
determining, in response to that the one or more software version identifiers are all different from the first version identifier, that the version of the to-be-loaded software is the secure version.

3. The method according to claim 1, wherein the one or more software version identifiers indicate the secure software version; and
the determining, based on the one or more software version identifiers and the first version identifier, that the version of the to-be-loaded software is the secure version comprises:
determining, in response to that a software version identifier that is the same as the first version identifier exists in the one or more software version identifiers, that the version of the to-be-loaded software is the secure version.

4. The method according to any one of claims 1 to 3, wherein the version file further comprises a first version number, and the first version number indicates a version of the version file; and
the method further comprises:
obtaining a second version number stored in a secure storage area in the network device; and
determining, in response to that the second version number is less than or equal to the first version number, that the version of the version file is a secure version.

5. The method according to any one of claims 1 to 4, wherein the version file further comprises a digital signature of the version file; and
the method further comprises:
verifying the digital signature; and
determining, in response to that the digital signature passes the verification, that the version file is the file that passes the security verification.

6. The method according to claim 4 or 5, wherein the secure storage area comprises a trusted platform module or an electronic fuse eFUSE.

7. The method according to any one of claims 1 to 6, wherein the one or more software version identifiers are respectively hash values of one or more software files.

8. The method according to any one of claims 1 to 7, wherein the version file further comprises one or more processor models, the one or more processor models respectively correspond to the one or more software version identifiers, and the one or more processor models indicate a processor that is in the network device and that is configured to load software corresponding to the one or more software version identifiers.

9. The method according to any one of claims 1 to 8, wherein the version file further comprises a product type identifier, and the product type identifier indicates a product type of the network device to which the version file is applicable.

10. The method according to any one of claims 1 to 9, wherein the method further comprises:
obtaining a new version file via a network; and
replacing the version file in the network device with the new version file.

11. A software loading apparatus, wherein the apparatus is used in a network device on which software is deployed, and the apparatus comprises:
an obtaining unit, configured to obtain a version file, wherein the version file is a file that passes security verification, the version file comprises one or more software version identifiers, and the one or more software version identifiers are used to determine a secure software version, wherein
the obtaining unit is further configured to obtain a first version identifier, wherein the first version identifier indicates a version of to-be-loaded software; and
a processing unit, configured to: determine, based on the one or more software version identifiers and the first version identifier, that the version of the to-be-loaded software is the secure version, and load the to-be-loaded software.

12. The apparatus according to claim 11, wherein the one or more software version identifiers indicate a disabled software version; and
the processing unit is specifically configured to determine, in response to that the one or more software version identifiers are all different from the first version identifier, that the version of the to-be-loaded software is the secure version.

13. The apparatus according to claim 11, wherein the one or more software version identifiers indicate the secure software version; and
the processing unit is specifically configured to determine, in response to that a software version identifier that is the same as the first version identifier exists in the one or more software version identifiers, that the version of the to-be-loaded software is the secure version.

14. The apparatus according to any one of claims 11 to 13, wherein the version file further comprises a first version number, and the first version number indicates a version of the version file;
the obtaining unit is further configured to obtain a second version number stored in a secure storage area in the network device; and
the processing unit is further configured to determine, in response to that the second version number is less than or equal to the first version number, that the version of the version file is a secure version.

15. The apparatus according to any one of claims 11 to 14, wherein the version file further comprises a digital signature of the version file; and the processing unit is further configured to: verify the digital signature; and
determine, in response to that the digital signature passes the verification, that the version file is the file that passes the security verification.

16. The apparatus according to claim 14 or 15, wherein the secure storage area comprises a trusted platform module or an electronic fuse eFUSE.

17. The apparatus according to any one of claims 11 to 16, wherein the one or more software version identifiers are respectively hash values of one or more software files.

18. The apparatus according to any one of claims 11 to 17, wherein the version file further comprises one or more processor models, the one or more processor models respectively correspond to the one or more software version identifiers, and the one or more processor models indicate a processor that is in the network device and that is configured to load software corresponding to the one or more software version identifiers.

19. The apparatus according to any one of claims 11 to 18, wherein the version file further comprises a product type identifier, and the product type identifier indicates a product type of the network device to which the version file is applicable.

20. The apparatus according to any one of claims 11 to 19, wherein
the obtaining unit is further configured to obtain a new version file via a network; and
the processing unit is further configured to replace the version file in the network device with the new version file.

21. A network device, comprising a processor and a memory, wherein the memory is configured to store program code, and the processor is configured to invoke the program code in the memory, to enable the network device to perform the method according to any one of claims 1 to 10.

22. A computer-readable storage medium, wherein the computer-readable storage medium stores instructions, and when the instructions are run on a computer, the computer is enabled to perform the method according to any one of claims 1 to 10.
